# EUROPEAN PATENT SPECIFICATION

(11) **EP 4 254 036 B1**
(45) Date of publication and mention of the grant of the patent: **26.02.2025**
(21) Application number: 22164624.3
(22) Date of filing: 28.03.2022
(51) Int. Cl.: G02B 21/26, G02B 1/00, G02B 5/18, G02B 21/00

(54) **AN ASSEMBLY OF OPTICAL ELEMENTS AND A METHOD FOR CONTROLLING LIGHT**
ANORDNUNG VON OPTISCHEN ELEMENTEN UND VERFAHREN ZUM STEUERN VON LICHT
ENSEMBLE D'ÉLÉMENTS OPTIQUES ET PROCÉDÉ DE COMMANDE D'ÉCLAIRAGE

(43) Date of publication of application: 04.10.2023
(73) Proprietor: Institute of Electronic Structure and Laser, Foundation for Research and Technology Hellas (IESLFORTH), 711 10 Heraklion, Crete (GR)
(72) Inventor: ZACHARAKIS, Ioannis, 711 10 Heraklion, Crete (GR); MYLONAKIS, Michail, 711 10 Heraklion, Crete (GR); MARAKIS, Evangelos, 711 10 Heraklion, Crete (GR); ZACHAROPOULOS, Athanasios, 711 10 Heraklion, Crete (GR); VERGIS, Emmanouil, 711 10 Heraklion, Crete (GR)
(74) Representative: Araujo, Daniel

(56) References cited:
- WO-A1-2015/155349
- WO-A1-2020/156671
- WO-A2-2007/081707

## Description

### Technical Field

The present disclosure concerns an assembly of optical elements for the adaptation or control of light, particularly for adapting or controlling light arriving from a light source. Particular preferred embodiments of the present disclosure concerns such an assembly for microscopy and a microscope comprising said assembly. The present disclosure further concerns a related method for controlling light, particularly for microscopy, and a computer implemented method and a corresponding computer program. The assembly of optical elements may particularly be a tunable single objective or illumination lens with standard coupling to a microscope body and configured to provide an adaptive illumination modulator capable of modulating both the amplitude and the phase profile of the microscope's input beam or of the light produced by the microscope's light source. The assembly may be particularly suitable to be used for converting a microscope into a super-resolved microscopy system. The assembly may also be any of: an optical fiber driver, a device for use in a secure communications system, a device for use in an optical physical unclonable function system, a laser lithography beam modifier, a device for use in vehicle's headlight.

### Background

For centuries optical microscopy constitutes one of the most fundamental paradigms in biological and medical imaging. Microscopes are the primary instrumentation in use to inspect micrometer detail with the use of light as a probe. While the plethora of variations and applicability of microscopes is a non-trivial task to catalogue, the basic elements of a microscope are the illumination source and the imaging part. The sample is set in the working distance of the imaging system, and it is illuminated most commonly either in transmission or reflection mode. The imaging part usually refers to an objective lens, a composite element that collects the light from the sample and is sent to an eyepiece or digital camera. The area that the imaging system can collect sufficiently signal is defined by the depth of field (DOF) and field of view (FOV). Typically, the magnification of conventional microscopes relies on the magnification capabilities of the objective lens as their ability to collect light from the effective zone defined by DOF and FOV.

One family of microscopy techniques is fluorescence microscopy, where fluorescent agents are embedded in the study sample. In this case, most commonly, illumination is used as the excitation method of those agents. Fluorescent light in different wavelength bands compared to the excitation light can be isolated in the imaging part and record only the fluorescent halo.

Another family of microscopy techniques is light sheet fluorescent microscopy (LSFM), a technique with an advantage in imaging mesoscale and microscale fluorescent samples. Although the imaging part of an LSFM is the same as conventional microscopy, the illumination method differs. The source of illumination is designed and composed with optical elements that create a light distribution that resemblances a plane or a sheet of light. Usually, this is achieved using cylindrical lenses that provide a light sheet of finite width and intensity uniformity. Such a light distribution is used to illuminate the subject of study, while the angle of the imaging path is vertical to the light sheet plane. The desired dimensions of the light sheet are to match or exceed the field of view of the imaging lens. In contrast, the width of the light sheet plane should be kept as thin as possible compared to the depth of view. The imaging system then can capture a thin layer of the sample of the study. A necessity for the technique is that the sample has fluorescent agents within its body. The signal of interest is the fluorescent light that is emitted after it has been excited by the light sheet. A filter is positioned in the imaging system to select only the fluorescent light. This configuration reduces the photodamage of fluorescence molecules from unnecessary exposure compared to conventional and confocal microscopy. The sample can be rotated with the axis of rotation in the middle of the illumination plane. A camera is recording the fluorescent signal at specific angles. The whole process of rotation and image recoding is controlled most commonly with a computer. Such a rotational scan will allow a volumetric observation of the sample. Each slice is recorded and then saved on the computer's memory. When the scan is finished, the recorded slices are digitally processed to provide a 3D reconstruction of the sample in question.

In LSFM, the sample preparation and positioning are complicated and customized processes. However, the most frequent methods to attach a sample are hanging, embedding, or enclosing. An LSFM operation requires the user to place the sample. The light sheet will be illuminating a thin slice vertically into the DOF of the imaging system. The sample is moved onto the light sheet region, and the fluorescence response is recorded. A stage assists on the rotation of the sample, and in periodic angular spacings, the optical response is recorded. After the scan is complete, the recorded data are digitally processed, and the user can inspect the volumetric representation of the sample.

Another family of microscopy techniques is the super resolution microscopy and specifically the structure illumination microscopy (SR-SIM). Structure detail that a microscope can capture is defined by the ability of the imaging lens to collect light from the optical response of the sample of the study. Each imaging objective has a finite capacity to collect light defined by the numerical aperture. A sample optical response varies given the k-vector of the illumination beam. In structure illumination microscopy, one predetermines the illumination profile with specific k-vectors defined by a light modulator, three in total or more, and records the response. One needs to repeat the recording for different positioning of the sample compared to the illumination modulator and illumination modulation profile orientation onto the sample. The accumulated result of those two positionings with digital processing maximizes the capacity to capture detail on the final image by the imaging objective in terms of resolution by 2-fold. In conclusion, the SR-SIM advantages are the sum of the ability to modulate the light beam profile in phase and amplitude with a combination of digital processing over a number of recorded images.

While structure illumination microscopy is a technique which generally offers high resolution imaging, it is limited by the small working distance that is generally related to this technique. Likewise, while light sheet fluorescence microscopy (LSFM) is a technique which offers long working distance, it is limited by the low resolution it offers. Hence, there is an important need for methods and systems for microscopy combining long working distance and high-resolution imaging, particularly for the purpose of imaging of in-vivo dynamics of organisms or live specimens, where high-level details of specimen function at a cellular level are required while holding intact the information of the whole specimen. Moreover, for several applications of interest, particularly the ones described further below, there is a need for methods and systems for controlling or adapting light, e.g. light received by a light source, wherein said methods and systems can offer a long working distance and/or the ability to create precise illumination patterns as may be required by the specific application of interest.

WO 2015/155349 A1 relates to a system and corresponding method for identification or estimation of a refractive index of a liquid, where the system comprises a light receiving part adapted to receive, during use, polarised or non-polarised light and a light emitting part adapted to transmit, during use, light.

WO 2020/156671 A1 relates to an apparatus and a method for manipulating a focus of excitation light on or in a sample, particularly in a microscope.

WO 2007/081707 A2 relates to displays such as head mounted displays and helmet mounted displays, etc.

### Summary of the Invention.

The present invention intends to fill a space between optical techniques of high resolution and small working distance such as structure illumination microscopy with those of low resolution and high working distance such as light sheet fluorescence microscopy. The device disclosed advantageously can offer high resolution and long working distance, and is particularly intended for microscopy imaging of in-vivo dynamics of organisms or live specimens, where high-level details of specimen function at a cellular level are required while holding the information of the whole specimen body intact. More generally, the present invention allows to adapting light and/or creating precise illumination patterns as may be required for specific applications of interest such as any of: microscopy, driving an optical fiber, implementing secure optical communications, implementing an optical physical unclonable functions, oPUF, protocol for authentication, lithography, smart adaptive lighting, headlights of vehicles.

The present invention according to claim 1 concerns an assembly of optical elements for the control of light, said assembly comprising in order from a first side of it: a light modulator configured to actively modulate a wavefront of light passing though the assembly, the light modulator comprising an electronic interface; a first polarization element configured to define a polarization of the light received from the light modulator; an optical element that has a region across which a value of a refractive index of the optical element varies for passively modulating the wavefront of the light received from the first polarization element; a second polarization element configured to define the polarization of the light received from the optical element, thereby second polarization outputting an adapted light. It can be understood that the adapted light is the optical output of the assembly i.e. the result of the assembly transforming the light that passes through it. Exemplary embodiment of the first aspect of the invention concern application of the invention in microscopy, hence, in relation to these exemplary embodiments the invention in its first aspect can also be considered as being an assembly of optical elements for microscopy.

The assembly can achieve high resolution and long working distance, because there is used the optical element, which preferably may comprise one or more photonic structures, in combination with active light wavefront control. The modulation offered by the optical element may enhance the production of light k-vectors and wavefront control in combination with the light wavefront modulator. Hence, an important advantage of this arrangement, is that it gives the ability to image at larger depths within biological tissue or complex media in a more general sense, since light diffusion can be proactively compensated within the assembly that may be the microscope objective. Shaping the incident wavefront with the modulator which may act as a spatial light modulator (SLM), can create a near diffraction limit, with high signal-to-noise ratio (SNR), circular spot at a long working distance behind the optical element which passively modulates the wavefront of the light. The system, i.e. the assembly according to the invention, can achieve all optical manipulation of the incident light with the light wave controllers, allowing scanning and focusing without mechanical movements, and increasing speed and stability of image acquisition and fidelity. The system can advantageously operate in variable working distances and wavelengths while maintaining the quality of the wavefront, allowing the inspection of small live specimens such as cells up to mesoscopic samples, in one non-limiting example such a sample being *Danio rerio* zebrafish. Additionally, the preferred use of complex wavefronts of multiple focal points advantageously permits image reconstruction of the sample using structure illumination microscopy and doubling the resolution compared to a conventional microscope. Moreover, the two polarization elements in combination can define whether the optical output from the assembly comprises ballistic or scattered light or both. Hence, when the two polarization elements have respective polarization planes which are parallel to each other, i.e. when the respective polarization angles of the two polarization elements are the same, then the optical output from the assembly may predominantly or exclusively comprise ballistic light i.e. light propagating ballistically through the assembly. However, when said polarization planes are not parallel to each other, and particularly when they are normal to each other, i.e. when the respective polarization angles differ by 90 degrees, said optical output may predominantly or exclusively comprise scattered light i.e. light scattered by the assembly's scattering parts between the two polarizers. Choosing between ballistic or scattered light or both can be beneficial depending on the intended application of the assembly. Hence, optionally and preferably the respective polarization angle or plane of the first and/or second polarization elements is adjustable. This can for example be done by any or both of the polarization elements being configured to rotate.

The optical element is configured to modulate the wavefront so that the latter preferably has the form of a speckle pattern, more preferably an elongated speckle pattern. In an embodiment, such an elongated speckle pattern is achieved by means of the optical element being a photonic structure with anisotropic modulation of the refractive index along one dimension. When the photonic structure is configured to cause such an anisotropic modulation along one direction, its use can advantageously create different wavelength sub-micrometer light-sheet structures at a user-defined position with high axial resolution at long working distances in the order of centimeters. From the above it is understood that preferably the optical element is configured to scatter light. More preferably the optical element is configured to anisotropically scatter or diffuse light. Likewise, optionally along at least one desired direction there is (i.e., the optical element has) a stripe-shaped variation (i.e. modulation) of the value of the refractive index of the optical element. When the modulation has a stripe shape that is aligned across at least one direction it may cause the formation of the aforementioned elongated speckle pattern.

Overall, the optical element which may act as a scattering medium, combined with the assembly's first and second polarization elements and the light modulation can be mounted altogether to create new state-of-the-art microscope objective. It is noted that the assembly's light modulator which can actively modulate the wavefront, may be a transmission or reflection mode light wave shaper. Hence, the light modulator may be or comprise a reflection or a transmission spatial light modulator.

In an exemplary embodiment the light modulator's configuration allows for advantageously making the assembly particularly compact and easily integratable within a microscope. In said exemplary embodiment, the light modulator comprises in order along an optical path: a beam splitter which is configured to direct about half of an intensity of the light towards a modulator screen which is reflective, the beam splitter being also configured to allow light being reflected by the modulator screen to pass through the beam splitter and reach a dovetail prism; the modulator screen which is connected to (or alternatively comprises) the electronic interface and is configured to operate on a reflection mode for reflecting the light and for actively modulating the wavefront of said light; the dovetail prism which is configured to direct towards a right-angle prism the light received from the modulator screen; the right-angle prism which is configured to receive the light received from the dovetail prism and direct said light to propagate towards the first polarization modulator. Optionally, said beam splitter is at the first side. An embodiment that is according to the aforementioned exemplary embodiment, further comprises a cup or support for mounting and fixing the modulator screen within the assembly. Optionally, the assembly may further comprise and imaging element, e.g. a lens, located between the first polarization element and the aforementioned right-angle prism, wherein said imaging element is configured to image the modulator screen onto the surface of the scattering medium. Therefore, said optional imaging element or imaging lens may be used (i.e. be configured to) to focus the modulated light (i.e. the light modulated by the modulator screen) onto an area close to the surface of the scattering medium.

The assembly of optical elements according to claim 10 of the present invention, may be a microscope lens system. Advantageously a lens system according to the invention offers adaptable operational characteristics based on altering the properties of the incident light wave. Moreover, the optical assembly (device) according to the invention may act as an adaptive illumination modulator of a light source e.g. for modulating both the amplitude and the phase profile of a microscope's input beam. The device overall can provide for versatility of operations in conventional microscopes.

For facilitating the transport and robustness of the assembly, and for facilitating the integration or the attachment of the assembly in other systems such as existing microscopes, in a preferred embodiment the assembly further comprises a housing that encapsulates the light modulator and the first and second polarization elements and the optical element, and said housing has an access for accessing the electronic interface. Preferably, said optical housing is configured to lodge the light modulator and the first and second polarization elements and the optical element at respective positions along a symmetry axis of the housing, said symmetry axis preferably coinciding with a propagation axis of the light. More preferably the housing is elongated and comprises a proximal end at the first side of the assembly and a distal end which is opposite to the proximal end. For advantageously being able to screw the assembly on a microscope, further preferably the aforementioned optional housing is threaded at the proximal end and/or at the distal end. In the latter case the threaded part of the connector may act as a connector for connecting the assembly to a microscope. More generally, the assembly may comprise a connector for connecting the assembly to a microscope or other optical instrument or apparatus, said connector preferably being at the first side.

In an embodiment, the assembly's first polarization element is a first polarizer, and/or the second polarization element is a second polarizer. Any or both of said first and second polarizers may optionally be linear polarizer(s) and/or polarizing beam splitter(s).

In an embodiment, the assembly comprises adjustment means for rotating and/or displacing the assembly or any part thereof in relation to a propagation axis of the light. Being able to rotate and/or displace the assembly or parts thereof, for example rotating the polarization elements, allows for optical aligning and can advantageously permit adapting the assembly to an apparatus or particular optical source used in combination with the assembly

In preferred embodiments the optical element is removably attachable or insertable to/in the assembly, preferably as a removable cassette. This may advantageously allow using different optical elements with different optical properties (e.g. different scattering and/or transparency profiles) for different types of samples, microscopes, wavelengths or other working parameters (e.g. working distance). Likewise, having cassettes may prevent damaging the respective optical elements.

In some embodiments, a surface of the optical element comprises a pattern, e.g. the surface comprises recesses and/or protrusions forming a pattern, and at the same time, despite having said pattern surface, the optical element is substantially transparent to an optical frequency or a range of optical frequencies of the light passing through the assembly during the latter's operation, so that the brightness at the assembly's optical output is high for illuminating sufficiently a sample that is tested using the assembly. Preferably, the optical element, a material comprised by the optical element, or a material from which the optical element is made of is more that 80% or 90% transparent at said frequency or range of frequencies. The aforementioned optional pattern on a surface of the optical element may be the primary cause of the modulation of the wavefront by the optical element. However, there also contemplated similar embodiment where a pattern is embedded within the volume of the optical element.

In a particularly preferred embodiment of the invention, the optical element comprises or is made of a material which has a refractive index of more than 1.3; a surface of the optical element comprises a pattern etched or engraved on the surface; said surface is made of the material; the material is more than 80% transparent to an optical frequency or to a range of optical frequencies of the light passing through the assembly. Preferably, said frequency or range of optical frequencies is in the visible spectrum. Also preferably, the material is a polymer.

Considering that the value of the refractive index of the optical element affects how the optical element passively modulates the wavefront of the light, in some embodiments said value is adjusted to further optimize the wavefront modulation. Hence, in an embodiment the optical element has a refractive index of between 1.3 and 1.8. Preferably, the optical element is made of a plastic that has a refractive index of between 1.3 and 1.8. More generally, the optical element preferably comprises or is made of materials, such as crystals or polymers or glasses or ceramics or others, preferably having a refractive index in the 1.3-1.8 range. A non-limiting list of such materials from which the optical element may be made of is the following wherein within parenthesis the corresponding refracting index that each of said materials typically (but not always) have is also provided: N-BK7 (n=1.52), Fused silica (n=1.46), N-SF11 (n=1.79), CaF2 (n=1.43), MgF2 (n=1.41), BaF2(n=1.47), ZnSe (n=2.7), ZnTe (n=3.1), Germanium (n=4.67). Hence, in some embodiments the optical element comprises (or is made of) any of: poly (methyl methacrylate), polyethylene terephthalate, Polycarbonate, Amorphous copolyesters, Fluorinated ethylene propylene, ABS thermoplastic, MABS thermoplastic, polymethylpentene, polyvinyl chloride, General Purpose Polystyrene, Styrene Methyl Methacrylate, fused silica amorphous silicon oxide, crystalline silicon oxide, sapphire, amorphous aluminum oxide, calcium fluoride, zinc selenide, zinc telluride, germanium, barium fluoride, magnesium fluoride, gallium phosphide, a crystalline or amorphous material (crystals, glasses, ceramics), or a combination thereof, or a material that offers transmission above 80% for the visible frequencies.

In an embodiment the assembly is a microscope lens system. In another embodiment the assembly is an objective lens. In another embodiment the assembly is an illumination lens.

In an embodiment the assembly further comprises an electronic controller which is connectable with the electronic interface and is configured to control the light modulator. The electronic controller may be a computer or be connected or be part of a computer. Also, the electronic computer may be connectable to the electronic interface via a wired or wireless connection.

The present invention in a further aspect concerns a microscope that comprises the assembly according to the invention. Said microscope preferably is any of a fluorescence microscope, a super-resolved microscopy system, a photoacoustic microscopy system, a light sheet fluorescence microscope or a structure illumination microscopy system. Further aspects of the invention concern other types of devices or systems comprising the herein disclosed assembly, said devices or systems being any of: an optical fiber driver, a device for use in a secure communications system, a device for use in an optical physical unclonable function system, a laser lithography beam modifier, a device for use in vehicle's headlight.

The invention in a further aspect concerns the use of the assembly of the first aspect in (for) microscopy, fluorescence microscopy, a super-resolved microscopy, photoacoustic microscopy, light sheet fluorescence microscopy or structure illumination microscopy. Moreover, the disclosed assembly may also be used in any of the following applications: driving an optical fiber, implementing a secure optical communication protocol, implementing an optical physical unclonable functions, oPUF, protocol for authentication, lithography, smart adaptive lighting, in a light, e.g. a headlight, of a vehicle.

According to the present invention claim 13 concerns a method for controlling light, the method comprising the consecutive steps of: receiving a wavefront of light; actively modulating the wavefront of light, thereby transforming said light into an actively modulated light; determining a polarization of the actively modulated light, thereby transforming the latter into a polarized light; passively modulating the wavefront of the polarized light, thereby transforming the latter into a passively modulated light; determining the polarization of the passively modulated light, thereby transforming the latter into an adapted light. The method according to the invention can be implemented by using the assembly of the first aspect of the invention. Exemplary embodiments of the method according to the fourth aspect of the invention are related to application of the method in microscopy. Hence, for these exemplary embodiments, the method according to the fourth aspect of the invention can also be considered as being a method for adapting light for microscopy.

In an embodiment the adapted light is a light sheet. The adapted light may be considered as the optical output resulting from applying the method on the optical input which is the light received by the first polarization element.

An exemplary embodiment of the method for microscopy according to the invention is executed by means of a microscope which is according to the invention, the microscope further comprising a feedback sensor or camera that is configured to receive the adapted light, the microscope further comprising a computer which comprises a memory, wherein the computer is connected to the feedback sensor or camera and is also connected to and is configured to control via the electronic interface the light modulator of the assembly, the method for microscopy further comprising the additional steps of: loading on the memory or computing with the computer a set of current parameters which correspond to operational parameters of the assembly's light modulator; controlling the light modulator according to the current parameters; detecting with the feedback sensor or camera the wavefront of the adapted light, and transferring to the computer information which is related to the detected wavefront; with the computer using the information and determining whether the detected wavefront differs from a desired wavefront, and/or determining a difference or similarity between the detected wavefront and the desired wavefront, wherein said desired wavefront is loaded or stored on the memory or is computed with the computer; if the detected wavefront differs from the desired wavefront, and/or if the difference is more than a condition difference, then repeat the above additional steps wherein in the first one of the additional steps a new set of current parameters is being loaded on the memory or is being computed with the computer by means of an optimization algorithm, until the detected light's wavefront is substantially the same with the desired wavefront, or until the difference is equal to or less than the condition difference. The exemplary embodiment of the method allows for accurately compensating for the diffusion of light that may take place within a sample being examined with the microscope, and hence, allows for imaging with high resolution. Using the exemplary embodiment may be combined with operating the microscope as a conventional LFSM microscope, where the method further comprises with the microscope examining a sample and recording digital images of the fluorescence of the sample for different positions of the sample, and digitally processing the digital images for preferentially providing a volumetric representation of the sample's fluorescence. The sample may be brought to different positions by means of a motorized stage, e.g. an xy or xyz stage, of the microscope.

Considering the above, it is contemplated that a preferred embodiment of the method according to the invention, comprises adapting light according to the invention by means of a microscope which is also according to the invention, said microscope comprising a motorized stage which supports a sample that is illuminated with the adapted light received from the assembly's second polarization element, the microscope further comprising an imaging sensor or camera that is configured to acquire an optical readout by receiving light from the sample, the microscope further comprising a computer which comprises a memory, wherein the computer is connectable to the imaging sensor or camera and is also connected to and is configured to control via the electronic interface the light modulator of the assembly, the computer further being connectable to and configured to control the motorized stage, the method for microscopy further comprising the steps of: calculating, by means of the computer, a set of positions; controlling, by means of the computer, the motorized stage to move at or about said positions; with the feedback sensor or camera acquiring a corresponding optical measurement for each one of the set of positions at or about which the motorized stage moves; transferring to the computer information which is related to the optical measurements. Another embodiment is according to the previous preferred one, and further comprises: for each of said positions determining and setting with the computer (i.e. by means of the computer) corresponding operational parameters for the light modulator. Hence, the additional steps of the exemplary embodiment of the method according the invention as described further above, said additional steps being preferably executed using the microscope's computer, may be repeated by for each of the different positions of the sample. Preferably, the method further comprises placing the stage at a resting position after acquiring the optical measurements corresponding to the set of positions. Also preferably, the method further comprises with the computer analyzing or processing the information related to the optical readouts.

Considering that a significant number of the steps of various embodiments of the method according to the invention can be executed by means of a computer, a further aspect of the invention concerns a computer implemented method executed by means of a microscope which is according to the invention, the microscope further comprising a feedback sensor or camera that is configured to receive the adapted light, the microscope further comprising or being connected to a computer which comprises a memory, wherein the computer is connected to the feedback sensor or camera and is also connected to and is configured to control via the electronic interface the light modulator of the assembly, and the computer performing the steps of: loading on the memory or computing a set of current parameters which correspond to operational parameters of the assembly's light modulator; controlling the light modulator according to the current parameters; detecting with the feedback sensor or camera the wavefront of the adapted light, and transferring to the computer information which is related to the detected wavefront; using the information and determining whether the detected wavefront differs from a desired wavefront, and/or determining a difference or similarity between the detected wavefront and the desired wavefront, wherein said desired wavefront is loaded or stored on the memory or is computed with the computer; if the detected wavefront differs from the desired wavefront, and/or if the difference is more than a condition difference, then repeat the above additional steps wherein in the first one of the additional steps a new set of current parameters is being loaded on the memory or is being computed by means of an optimization algorithm, until the detected light's wavefront is substantially the same with the desired wavefront, or until the difference is equal to or less than the condition difference.

In an embodiment of said computer implemented method, the microscope further comprises a motorized stage which supports a sample illuminated with the adapted light received from the assembly's second polarization element, the microscope further comprising an imaging sensor or camera that is configured to acquire an optical readout by receiving light from the sample, wherein the computer is connected to the feedback sensor or camera and is also connected to and is configured to control via the electronic interface the light modulator of the assembly, the computer further being connected to and configured to control the motorized stage, the computer implemented method further comprising the steps of: calculating, by means of the computer, a set of positions; controlling, by means of the computer, the motorized stage to move at or about said positions; with the feedback sensor or camera acquiring a corresponding optical measurement for each one of the set of positions at or about which the motorized stage moves; transferring to the computer information which is related to the optical measurements.

In an embodiment the computer implemented method (CII) further comprises for each of said positions determining and setting with the computer corresponding operational parameters for the light modulator. This allows for compensating for the light diffusion by the sample for each of the different sample positions. Preferably, the CII further comprises placing the stage at a resting position after acquiring the optical measurements corresponding to the set of positions. Also, the CII preferably further comprises analyzing the information related to the optical readouts, by means of the computer.

It is noted that the computer which may be part of the microscope and be used for executing several of the aforementioned embodiments, may not necessarily be an integral part of the microscope, but rather be a separate computer or sets of computers which is/are connectable to the microscope. Said computer or sets of computers, may be local or at a remote location with respect to the microscope, and may for example be connected to the microscope via a network or the internet.

A further aspect of the invention concerns a computer program comprising instructions which, when the program is executed by a computer, cause the computer to carry out the computer implemented method according to the invention.

### Description of the Drawings

FIG. 1 shows an embodiment of the assembly according to the invention.
FIG. 2 shows an embodiment of the assembly according to the invention.
FIG. 3 shows the surface of an optical element for passively modulating the wavefront in an embodiment of the assembly according to the invention.
FIG. 4 shows an exploded view of an embodiment of the assembly according to the invention.
FIG. 5 shows the embodiment of the assembly of FIG. 4, depicting the walls of housing 6 as being semitransparent (in reality they may not be transparent) for the purpose of indicating the position of other components within said housing.
FIG. 6 shows the embodiment of the assembly of FIG. 4.
FIG. 7 shows an exploded view of an embodiment of the assembly according to the invention.
FIG. 8 shows the embodiment of the assembly of FIG. 7, depicting the walls of housing 6 as being semitransparent (in reality they may not be transparent) for the purpose of indicating the position of other components within said housing.
FIG. 9 shows the embodiment of the assembly of FIG. 7.
FIG. 10 shows blocks of components of a microscope comprising a wavelens system according to an embodiment of the invention.
FIG. 11 is a flow diagram of an embodiment of a method according to the invention.
FIG. 12 is a flow diagram of an embodiment of a method or of a computer implement method according to the invention.
FIG. 13 shows an optical drive configuration using an embodiment of the assembly according to the invention.
FIG. 14 shows an optical fiber communication pair using two embodiments of the assembly according to the invention.
FIG. 15 shows an authentication setup system using two embodiments of the assembly according to the invention.
FIG. 16 shows an embodiment of the assembly according to the invention, used as a laser lithography beam modifier.
FIG. 17 shows a car headlight comprising an embodiment of the assembly according to the invention.

### Detailed Description of the Embodiments

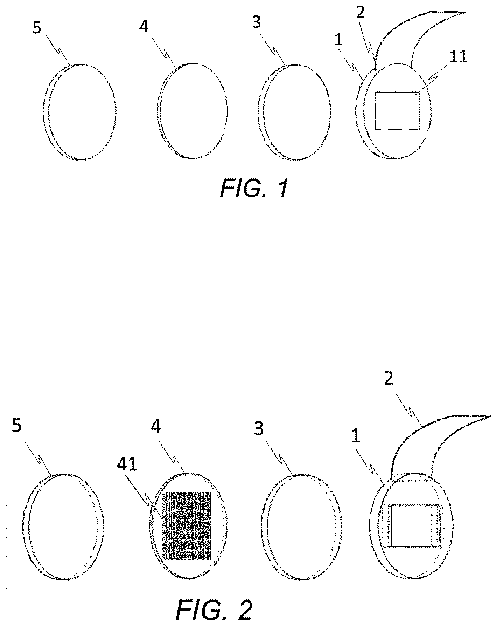

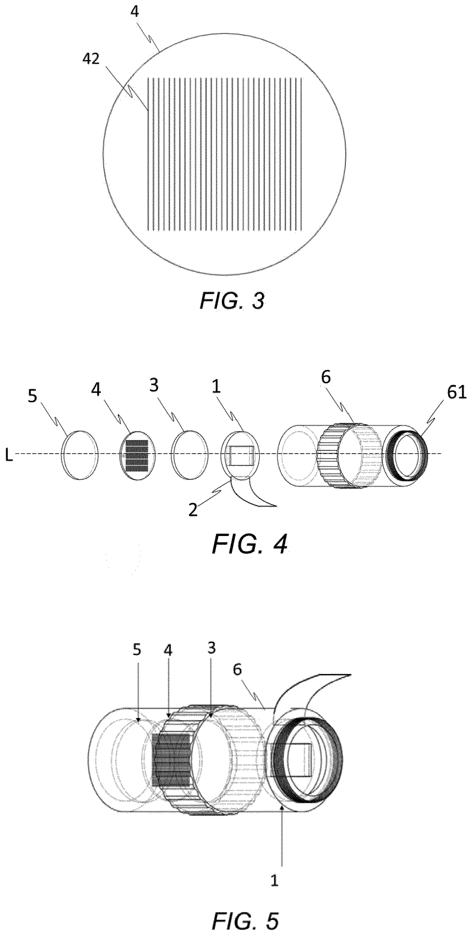

FIG. 1 shows an embodiment of an assembly for microscopy according to the invention, the assembly comprising in order from a first side, specifically from the right towards the left as shown in FIG. 1, the following: a light modulator 1 configured to actively modulate a wavefront of light received by the light modulator and passing though the assembly, the light modulator 1 comprising an electronic interface 2; a first polarization element 3 configured to define a polarization of the light received from the light modulator 1; an optical element 4 that has a region across which a value of a refractive index of the optical element 4 varies for passively modulating the wavefront of the light received from the first polarization modulator 3; a second polarization element 5 configured to define the polarization of the light received from the optical element 4. In each of the embodiments of FIG. 2 and FIG. 3 which are similar to the embodiment of FIG. 1, the optical element comprises an anisotropically scattering photonic structure that is a pattern 41, 42 engraved on the surface of the optical element 4. The patterns of the optical elements in FIG.2 and FIG. 3 comprise channels which are engraved on the optical element and are parallel to each other. In a preferred embodiment said optical element is made of an optical transparent material with a refractive index of 1.3 or more, with light transmission of 80% in the visible light, and the pattern is etched on a surface of the material which preferably is a polymer.

In a preferred embodiment, the manufacturing process for making the aforementioned scattering pattern of the optical element relies on controlled etching using a rough and stiff surface to engrave a material of the optical element. The type of the etching process can lead to different types of light scattering structures. For example, 1-D controlled etching creates a photonic structure with anisotropic modulation of the refractive index along one dimension. The resulted optical response will be an elongated speckle pattern. Using this media type can create different wavelength sub-micrometer light-sheet structures at a user-defined position with high axial resolution at long working distances (centimeters).

The scattering photonic structure (i.e. the scattering medium) may be formed on the optical element by random direction-controlled etching which generally creates a completely anisotropic structure that leads to a typical speckle pattern. Other manufacturing methods for the fabricating the scattering medium may be lithography, chemical etching, mechanical etching, 3d printing, machining, patterned (e.g. using a deposition mask) deposition (e.g. by print transfer, thermal evaporation, scattering etc.) or other.

As mentioned further above the optical element is preferably made or comprises one or more polymers which more preferably are selected from the following list: i) Poly (methyl methacrylate) (PMMA), also known as acrylic, acrylic glass, or plexiglass. PMMA transmits up to 92% of visible light (3 mm thickness), and gives a specular reflection of about 4% from each of its surfaces due to its refractive index mismatch (1.490); ii) Polyethylene terephthalate (sometimes written poly(ethylene terephthalate)), commonly abbreviated PET, PETE. Its refractive index is 1.575; iii) Polycarbonate (PC) which is a high-performance amorphous and transparent thermoplastic polymer that offers high impact strength, dimensional stability, good mechanical properties, etc. It can transmit over 90% light, and its refractive index is 1.585; iv) Amorphous copolyesters (PETG) combine excellent clarity and toughness with outstanding heat and chemical resistance. PETG transmits up to 92% of visible light, and its refractive index is 1.55; v) Fluorinated ethylene propylene (FEP) is chemically a copolymer of hexafluoropropylene and tetrafluoroethylene. This polymer transmits a high percentage of ultraviolet and visible light. The visible transmission of FEP is approximately 96%, and its refractive index is about 1.55; vi) Acrylonitrile butadiene styrene (ABS) is an impact-resistant thermoplastic composed of three monomers: acrylonitrile, butadiene, and styrene. The manufacturing process converts it into a highly transparent ABS resin called MABS (Methyl Methacrylate Acrylonitrile Butadiene Styrene). Its optical transmissivity is about 86% for the visible light, and its refractive index is about 1.52; vii) Polymethylpentene (PMP), is a thermoplastic polyolefin with high thermal stability, excellent dielectric characteristics, and a high chemical resistance. Its optical transmission value is more than 90%, and its refractive index 1.463; viii) Polyvinyl chloride (PVC) is one of the most widely produced synthetic plastic polymers. Its light transmissivity is more than 85%, and its refractive index is about 1.531; viiii) General Purpose Polystyrene (GPPS), also known as crystal-clear polystyrene. Its light transmissivity is more than 88%, and its refractive index is about 1.6; x) Styrene Methyl Methacrylate (SMMA) is a high clarity styrene-acrylic copolymer with a glossy surface. Its light transmissivity is more than 90%, and its refractive index is about 1.59.

A goniometer may be used for characterizing the light intensity distribution of the scattering medium (photonic structure) of the corresponding optical element of an embodiment of the assembly. The sample is mounted onto a base fixed on an arm that can be rotated freely. The arm in an example has a radius in the order of 15 cm. The length of the arm allows sufficient distance from the sample to capture intensity patterns in the far-field. The scattering sample is placed in the center of a goniometer and is then illuminated using a laser source of appropriate wavelength at a normal incidence angle. Angular measurements are recorded on the other side of the sample using an optical power meter mounted on the rotating arm. The rotating arm can be rotated by 180°around the illuminated sample. The laser is mounted behind the scattering medium, arranged so that the collimated beam is normally incident at the sample. The output angle is defined in relation to the original optical axis when the diffuser is not within the light path, while the signal is sampled every 1° and then plotted as normalized intensity versus output angle.

In one non-limiting example the resulting diffused pattern was distributed mostly in one dimension (horizontal). Using ten different scatterers made by 0,6mm thick Poly (methyl methacrylate) (PMMA) and taking the mean value for the intensity distribution for each angle, the result is that 50% of maximum intensity is detected ±10° relative to the optical axis.

FIG. 3 shows a "Glaucous Anisotropic k-Vector Optimization System" (GLAVKOS) which is an example and preferred embodiment of the optical element of the assembly. The shown in FIG. 3 optical element, aka GLAVKOS, is a passive optical element fabricated with a succession of mechanical and chemical processes resulting in a controlled shaping. The refractive index modulation of GLAVKOS is of sufficient magnitude to enhance the production of light k-vectors and wavefront control in combination with the light wavefront modulator 1. The medium/pattern 42 has a striped shaped modulation of refractive index. The stripes follow the shown direction. The material of GLAVKOS is of sufficient refractive index value and high transparency in the optical frequencies' domain. The modulation of the refractive index is in a manner that the output field of this GLAVKOS follows the desired symmetries and of a diversified range of the k-vectors.

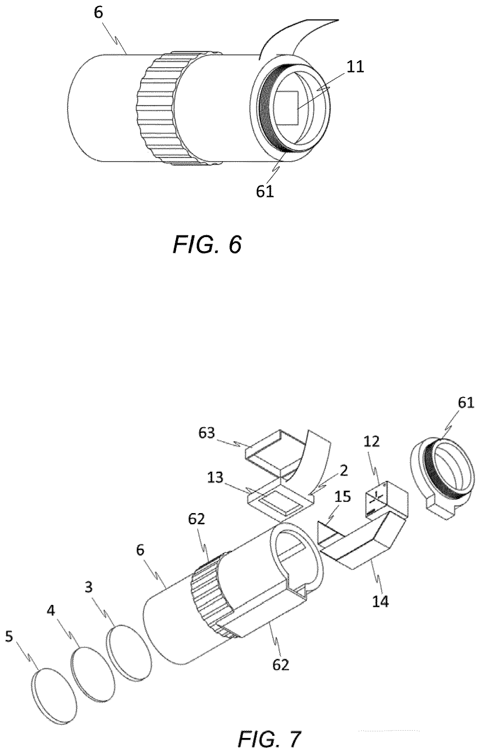

With reference to FIG. 4-6 the embodiment of the assembly shown therein is according to the invention, and further comprises a housing 6 that encapsulates the light modulator 1 and the first and second polarization elements 3, 5 and the optical element 4. The light modulator is a transmission mode SLM and its electronic interface is connected to the shown ribbon cable, however other types of wired or wireless connections are contemplated for connecting to the electronic interface. As is also shown in FIG. 4-6 the ribbon cable passes through the housing, hence the housing 3 has an access for accessing the electronic interface 2. Hence by connecting said cable to a computer or controller it is possible to power, drive and control the light modulator 1. Also, as shown the housing 6 is elongated, and comprises a proximal end at the first side of the assembly and a distal end which is opposite to the proximal end, and the housing is configured to lodge the light modulator 1 and the first and second polarization elements 3, 5 and the optical element 4 at respective positions along a longitudinal axis L of the housing 6. Said respective positions are indicated by the arrows shown in Fig. 5. The longitudinal axis L is indicated by the dashed line in FIG. 4 and coincides with a propagation axis of the light. The housing in the shown embodiment is a hollow tube with two openings at its two distal ends called the proximal and the distal end (i.e. the ends at the left and the right). It may be understood that in the embodiment shown in FIG. 6, light enters the housing/tube via the tube's right opening, propagates along the housing's length and via the assembly, and exits via the housing's left opening. In the embodiments of FIG. 4-6 the light modulator 1 is a transmission mode spatial light modulator, and it comprises an active area 11 which is where from light passes through being actively modulated when the light modulator is in operation. The housing 6 is preferably threaded at the proximal end and/or at the distal end, and in the embodiments of FIG. 4-6 the housing is threaded at the end on the right side proximally to the light modulator.

Hence, it can be understood that FIG. 5-6 shows an embodiment of the assembly/device in its assembled form for a linear light-path orientation with a circular form factor. The device's shown housing 6 is an external shell made of a rigid material and encapsulate the optical elements in use. It is noted that in the shown embodiment the polarization element 3, 5 are linear polarizers, the optical element 4 is a custom-made scattering medium, and the modulator 1 is a transmission mode light wave modulator. Appropriate electronic ports are also preferentially included. Light impinges first on the light wave modulator 1. The device encapsulation 6 is preferably composed of the appropriate material combination that ensures heat dissipation accumulated from the optical elements in the housing's interior, and ensures optical stability and longevity of the device. The design is appropriate for integration at many commercially available microscopes. For this purpose, the metallic external threaded part 61 can vary. Depending on the microscope to be installed, this thread can be made RMS, M25x0.75, M26x0.706, M27x1.0, M32x0.75, M34x1.0 etc.

FIG. 4-5 shows the internal structure of the device, particularly the optical elements positioned along the light path and attached to the external enclosure 6. The mounting of the body 6 of the optical elements offers rotation and displacement adjustments to the propagation axis of the light beam. The digital connection (cable) is also incorporated into the design of the device enclosure to address/drive the active optical element 1 (the active light modulator). The connector (cable) can be incorporated onto the enclosure structure or directly coupled through port openings onto the active optical element.

In FIG. 5-6 the body (housing) 6 is depicted as cylindrical and plane. However, this is not a necessary limitation. The optical elements may preferably have a width of optical frequencies response that covers the optical frequencies in amplitude transmission, phase, and polarization control.

FIG. 4 further shows the assembly concept of the light wave control microscope illumination lens. All the optical and optoelectronic components are inserted in the housing 6 which is depicted a circular and linear path design. The order of the assembly's optical components can be seen in FIG. 4. The first component is the light wave shaping device 1 which is controlled with electronic control and can modulate the optical wavefront of the beam actively. The second component is the first polarizer 3 that passively but in a controllable manner can modulate the polarization of the incident beam. The third component is a passive optical element 4 fabricated to present varying refractive index. The variations of the refractive index are such as to passively modulate the wavefront. The fourth component is the second polarizer that modulates the beam's polarization in a passively but controllable manner.

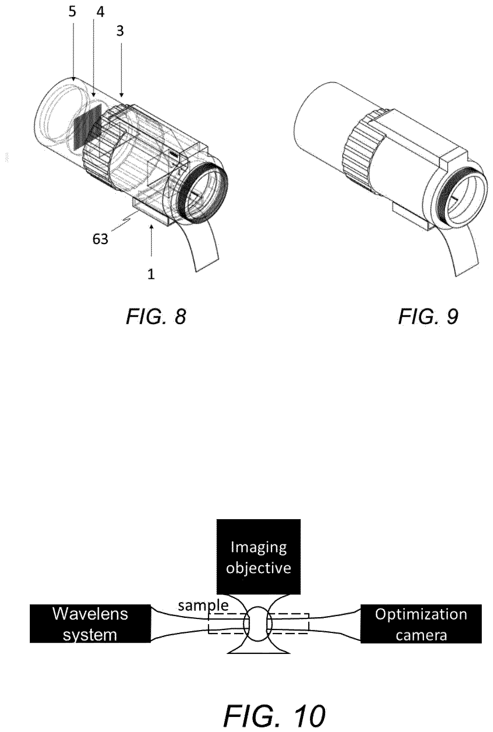

The embodiment shown in FIG. 7-9 is similar to the embodiment of FIG. 4-6, but has a different light modulator which operates at a reflection mode. Specifically, the light modulator 1 shown in FIG. 7 comprises a beam splitter 12, a modulator screen 13, dovetail prism 14 and a right-angle prism 15. The beam splitter 12 is configured to direct about half of an intensity of the light towards the modulator screen 13 which is reflective. The beam splitter 12 is also configured to allow light being reflected by the modulator screen 13 to pass through the beam splitter 12 and reach the dovetail prism 14. The modulator screen 13 comprises the electronic interface 2 and is configured to operate on a reflection mode for reflecting the light and for actively modulating the wavefront of said light. The dovetail prism 14 is configured to direct towards the right-angle prism 15 the light received from the modulator screen. The right-angle prism 15 is configured to receive the light from the dovetail prism 14 and direct said light towards the first polarization modulator 3. The approximate positions along the interior of the housing, of the light modulator 1, of the first polarization elements 3, of the scattering optical element 4 and of the second polarization element of the assembly once lodged inside the housing 6, are indicated by the arrows in FIG. 8. As is also shown in FIG. 7, the housing comprises a cup (a support) 63 for mounting and fixing the modulator screen within the assembly, and the housing 6 also comprises a compartment 62 wherein the dovetail prism 14 fits. In the shown embodiment the beam splitter 12 and the right-angle prism 15 are fixed on the dovetail prism 14.

Also as shown in FIG. 8 the housing at the proximal end (right side) of the housing 6 has a removable end part 61 which is threaded so that the assembly can be attached, detached, screwed or unscrewed to/on a microscope. As shown, the housing 6 preferably has an external surface shaped (i.e. configured) to facilitate the handling of the assembly by the user, and this particularly useful when the assembly is a lens for use with a microscope.

Hence, it can be understood that the embodiment shown in FIG. 7-9 may be, i.e. acts as, a wavefront-shaping microscope illumination lens in an angled path orientation design, with compact, almost cylindrical enclosure 6. Light inserts to the microscope lens from the right side, i.e. via the aforementioned threaded part 61 at the proximal end. The threaded part 61 allows for lens adapting to each microscope. For this purpose, the threaded part may vary, and different interchangeable threaded parts may be used in the assembly. The most common microscope threads are RMS, M25x0.75, M26x0.706, M27x1.0, M32x0.75, M34x1.0 etc. The first optical element that light meets in the shown embodiment is the beam splitter 12 which in one example is a half-inch 50:50 cubic beam splitter. Through the beam splitter 12, half of the intensity is directed to the reflection mode light wave modulator screen 13 connected to the electronic interface 2 which offers the electronic connection of the modulator screen 13 with its driver mount. The modulator screen 13 is mounted to the main objective shell/tube which in the shown embodiment is the main body of the housing 6, and an external cup 63 is used to ensure a robust and stable mounting for the modulator screen 13. The modulator screen 13 reflects the modulated light and, after passing through the beam splitter 12, reaches a dovetail prism 14. The next optical element is the right-angle prism 15. This optical element assembly ensures that the light propagation axis coincides with the symmetry of the cylindrical enclosure (the tube of the housing). In the embodiment of FIG. 7-9, the polarization elements 3, 5 are for linear polarizers, and the optical element 4 can be interchanged as a removable cassette. FIG. 8 shows the internal structure of the device, where every optical element is defined by the zone it covers on the light path and it is attached on the external enclosure. In the shown embodiment, the mounting of the body of the optical elements offers rotation and displacement adjustments in relation to the propagation axis of the light beam which coincides with the symmetry of the cylindrical enclosure. The digital connection is also incorporated on the design of the device enclosure to address the appropriate active optical element directly. The light wave modulator connector can be incorporated through port openings onto the active optical element. All the optical elements are mounted into specific positions.

FIG. 9 further shows the aforementioned embodiment of the design concept of the wavefront-shaping microscope illumination lens in a curved path orientation design, with compact, almost cylindrical enclosure. All the optical and optoelectronic elements are mounted together. Referring to FIG. 7-9 the wavelens apparatus (i.e. the assembly) defines an optical path where an incoming beam is introduced through the input port (i.e. the opening of the housing 6 at the latter's proximal end). The optical beam can propagate through the aforementioned set of optical elements to acquire the desired modulation and exit through the output port of the device (i.e. through the opening of the housing 6 at the latter's distal end). The modulated wavefront may then illuminate the sample, and the optical response can be recorded with an imaging system of a microscope. The apparatus of FIG. 7-9 is composed of the active light wave modulator 1 that is controlled via the computer interface 2. The aforementioned polarizers 3, 5 and scattering optical element 4 are included in the modulation path to combinedly modulate the polarization and phase of the light.

In an embodiment the optical assembly, which may be also called wavelens system, is used for microscopy as shown in FIG. 10. As shown in FIG. 10, an optimization camera may also be part of the apparatus (of the assembly) that can be incorporated onto the imaging system of the microscope or extended as an additional part onto the microscope. The imaging system may comprise an imaging objective as shown in FIG. 10 which refers to the case that the optical output of the wavelens system is a light sheet with a dynamically controlled wavefront for illuminating the sample. The active elements of the wavelens apparatus and the optimization camera may be controlled via a software suite running on a computer (not shown) of the system. The apparatus's user may position the sample onto the sample holder. Then through the software GUI the user may set the mode of function the wavelens will perform. An algorithm may initiate an automated process to form the desired wavefront.

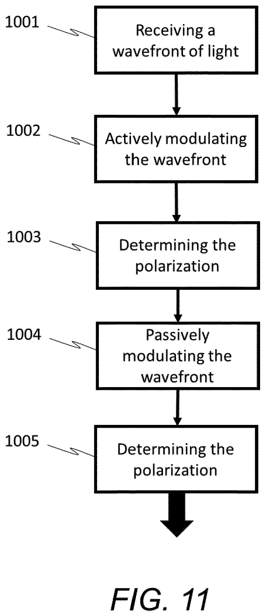

An embodiment of the method according to the invention comprises the steps indicated in the flow diagram of FIG. 11, said steps being: in step 1001, receiving a wavefront of light; in step 1002 actively modulating the wavefront of light, thereby transforming said light into an actively modulated light; in step 1003 determining a polarization of the actively modulated light, thereby transforming the latter into a polarized light; in step 1004 passively modulating the wavefront of the polarized light, thereby transforming the latter into a passively modulated light; in step 1005 determining the polarization of the passively modulated light, thereby transforming the latter into an adapted light.

The method according to the invention may be performed by means of the assembly according to the invention where at step 1001 the input light reaches (i.e. is received by) the light modulator 1. Subsequently steps 1002, 1003, 1004 and 1005 successively occur respectively be means of the first polarization element 3, the optical element 4 and the second polarization element via which the light successively passes travelling though the assembly. The optical output, i.e. the adapted light after the application of step 1005, preferably has the form of a light sheet, and some of the possible ways of achieving this is by having an optical element which has a one-dimensional (1D) scattering pattern on it, and/or by controlling the shape of the optical input of the assembly.

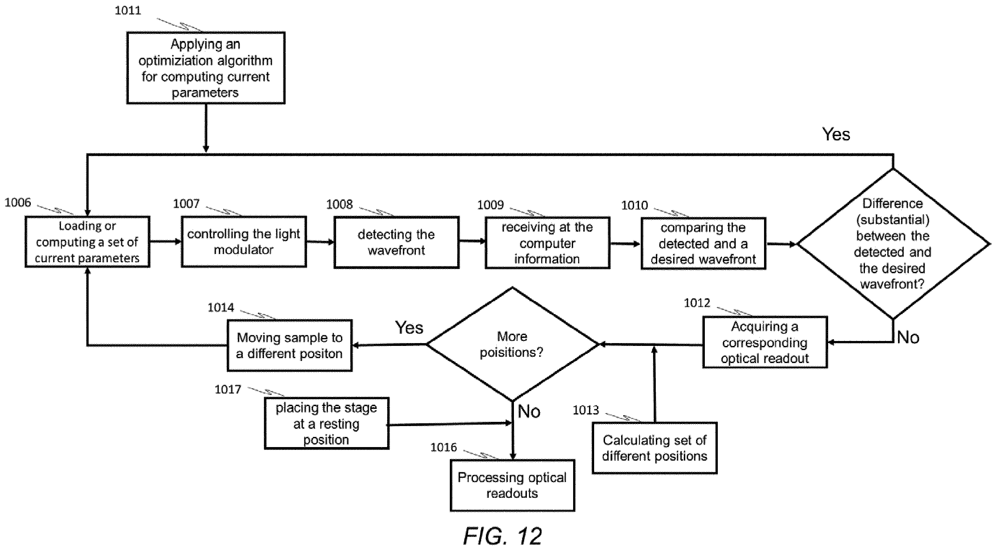

In a preferred embodiment, the method is executed/performed by means of a microscope which comprises an assembly of optical elements according to the invention, and also comprises: a feedback sensor or camera that is configured to receive the adapted light; a motorized stage which supports a sample that is illuminated with the adapted light received from the assembly's second polarization element; an imaging sensor or camera that is configured to acquire an optical readout by receiving light from the sample. The microscope further comprises or is connected to a computer which comprises a memory, wherein the computer is communicatively connected to the feedback sensor or camera and to the imaging sensor or camera, and the computer is also connected to and is configured to control via the electronic interface the light modulator of the assembly. The computer is also communicatively connected and configured to control the motorized stage. As shown in FIG. 12, in the aforementioned preferred embodiment, the method for microscopy comprises the following additional steps.

In step 1006 loading on the memory or computing with the computer a set of current parameters which correspond to operational parameters of the assembly's light modulator.

In step 1007 controlling the light modulator according to the current parameters.

In step 1008 detecting with the feedback sensor or camera the wavefront of the adapted light. In step 1009 receiving at (or transferring to) the computer information which is related to the detected wavefront.

In step 1010 with the computer (i.e. by means of the computer) using the information and determining whether the detected wavefront differs from a desired wavefront, and/or determining a difference or similarity between the detected wavefront and the desired wavefront, wherein said desired wavefront is loaded or stored on the memory or is computed with the computer. Hence, it can be considered that in step 1010 the detected wavefront is compared with the desired wavefront.

If the detected wavefront differs from the desired wavefront, and/or if the difference is more than a condition difference, then repeat the above additional steps wherein in step 1006 a new set of current parameters is being loaded on the memory or is being computed with the computer by means of an optimization algorithm applied in step 1011. When the detected light's wavefront is substantially the same with the desired wavefront, or when the difference is equal to or less than the condition difference, then a next step may be applied such as the step 1012.

In step 1012 with (by means of) the imaging sensor or camera acquiring an optical readout.

In step 1013 calculating, by means of the computer, a set of positions. This step may also be executed before any of the previous steps.

In step 1014 controlling, by means of the computer, the motorized stage to move at or about each one the positions of said set of positions.

For each of said positions at which the sample is moved, repeating the aforementioned steps 1006-1010, 1012 and where needed step 1011, this is to say performing the following:
- with the feedback sensor or camera acquiring a corresponding optical measurement for each one of the set of positions at or about which the motorized stage moves;
- transferring to the computer information which is related to the optical measurements;
- for each of said positions determining and setting with the computer corresponding operational parameters for the light modulator;
- with the imaging sensor or camera acquiring a corresponding optical readout for each of said positions;

In step 1016 processing, by means of the computer, the information related to the optical readouts.

Optionally in step 1017, placing the stage at a resting position after acquiring the optical measurements corresponding to the set of positions.

The set of steps 1006-1017 of the aforementioned embodiment, or any subset of set steps can constitute a corresponding embodiment of the computer implement method according to the invention. An embodiment of the computer implemented method according to the invention, may be executed by means of a software which comprises instructions for executing any or all of the aforementioned steps.

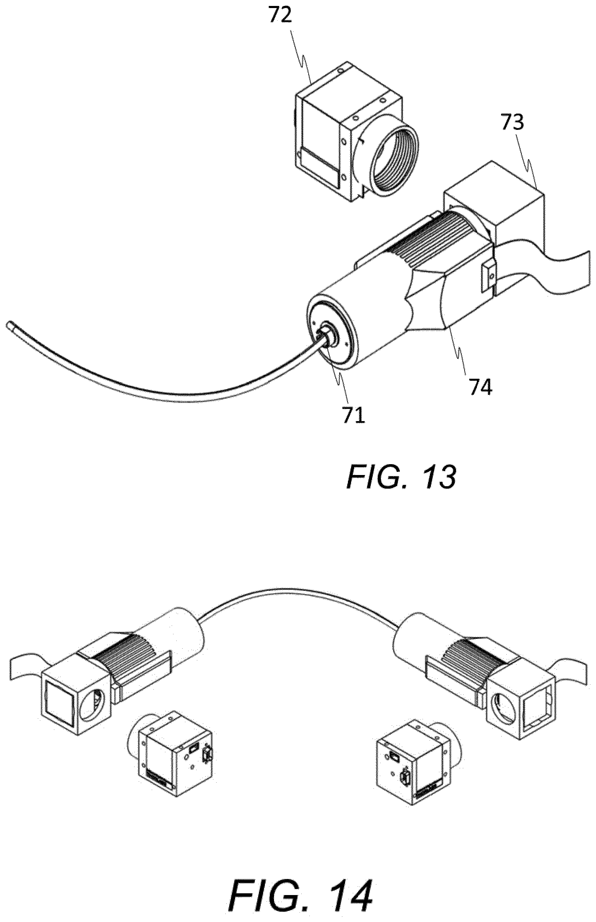

FIG. 13 shows a device 74 comprising an assembly according to the invention, used as an optical fiber driver. The device of the embodiment shown in FIG. 13 offers the function of driving a number of fiber modes. FIG. 13 shows a fiber end coupler 71 which is mounted on the output of the device. FIG. 13 also shows an optical recording device 72, such as a camera, which can provide the required feedback signal to the computer software. The camera is placed in the device's input in combination with a light separation system such as a beam splitter 73. The user chooses the appropriate light source, and its light beam is guided to the device's input. The input of the device is considered to be at the beam splitter.

FIG. 14 describes the utilization of a device according to the invention in for the implementation of an optical fiber communication protocol. Specifically, FIG. 14 shows an optical fiber communication pair wherein the invention in its first aspect is used as the platform of secure communication protocols based on optical fibers. The embodiment of FIG. 14 comprises a pair of devices used in the aforementioned optical fiber driver configuration related to FIG. 13. Referring to FIG. 14, an optical fiber is used, with each end of the fiber being mounted on a corresponding one of the two devices. Depending on the communication protocol to be used, the devices may be configured appropriately. In such a configuration, each of the optical fiber drivers (i.e. the devices) may be operated to perform asymmetric communication protocols such as BB84 and Quantum Key Distribution based algorithms. One of the two devices may be a sender device which modulates the light beam in the appropriate manner the protocol requires, and said sender device is coupled on a corresponding optical waveguide. The signal sent by the sender device is transferred on the fiber's receiver end wherein there is a receiver device, said receiver being the second device for which, with respect to the sender device, the device input and output fronts are flipped. The signal is processed if required by the protocol, or said signal remains unprocessed to be recorded by the optical recording device (which may also be called optical imaging device). The sequence above is reversed when a receiver of the signal wants to send or reply to the message related to the optical signal sent by the sender to the receiver.

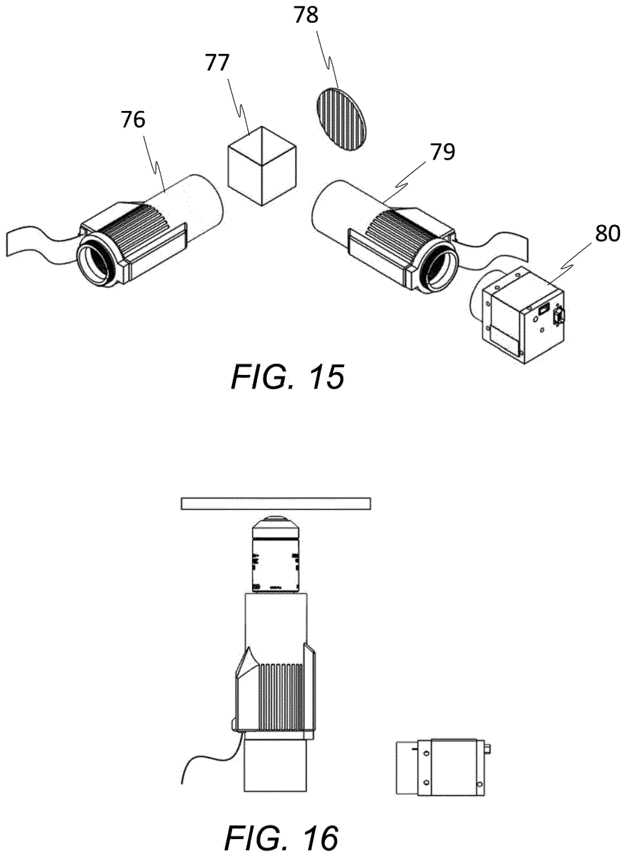

FIG. 15 concerns an authentication platform for optical Physical Unclonable Function system. In the embodiment of FIG. 15, the device is part of an authentication system for using optical physical unclonable functions (oPUF) protocols. In this case, two devices can authenticate a user who presents the correct token, an oPUF. In the configuration shown in FIG. 15, one device 76, also called "challenge modulator", which is according to the first aspect of the invention is placed to modify an inspection light beam. The modulated wavefront from the challenge modulator's output passes through a beam separation system 77, such as a beam splitter. The wavefront from the challenging part may be imprinted on the oPUF 78. The second device 79 may receive the reflected wavefront. In the second device, the accustomed output side is reversed with respect to the first device, and it is used as input of the device. The incoming beam may be modulated in accordance with the protocol in use, and may be captured by the optical recording device 80 which in FIG. 15 is depicted as a camera device.

FIG. 16 describes the use of a device or assembly according to the first aspect of the invention, as a laser lithography beam modifier. In this case, the device can be used as a structured light modulator for laser lithography applications. In such an application, the laser beam of a lithography system may be injected onto the device by its input. Software may control the device to modify the beam according to the user's needs. The beam may be particularly modified using the GLAVKOS plate to produce long fabrication depths or use another configuration of the device to create the appropriate light pattern according to the fabrication requirements of the user.

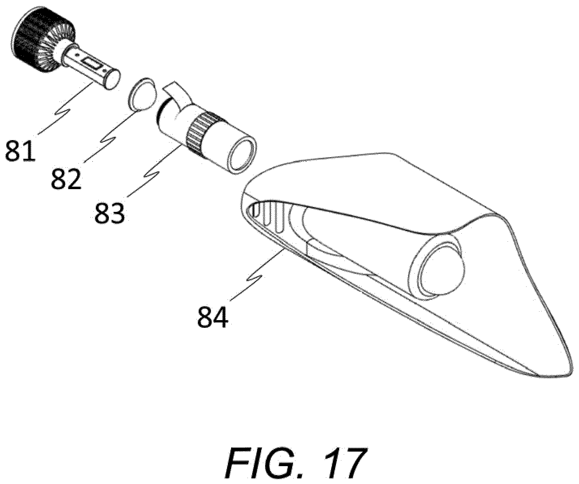

FIG 17 shows an embodiment of an automobile headlight comprising a device according to the first aspect of the invention. The assembly can be used at a vehicle's headlight as an element for smart adaptive lighting. As shown in FIG. 17, a single bulb or an array of light sources 81 emit(s) light. A collimation lens 82 collects the emitted light from the source(s) 81 and generates a collimated beam that meets the device 82 which is (i.e. comprises the assembly) according to the first aspect of the invention. All the previous elements 81, 82, 83 are preferably mounted into a housing 84 that directs light in front of, or towards the back of, a vehicle. The device 82 may receive feedback from a camera or a sensor (not seen on the figure) that observes the area around the vehicle and shapes the light beam depending on the circumstances by adaptively addressing the appropriate phase mask. The described embodiment can steer the light beam or create different light patterns in real-time leading to a smart and robust automotive lighting solution without any mechanical moving part and complex electronic structures. In this embodiment the presence of the scattering medium is optional, and hence, the scattering medium may be omitted from the assembly of optical element in the device 83.

## Claims

1. An assembly of optical elements for the control of light, comprising in order from a first side of the assembly:
- a light modulator (1) configured to actively modulate a wavefront of light passing though the assembly, the light modulator (1) comprising an electronic interface (2);
- a first polarization element (3) configured to define a polarization of the light received from the light modulator (1);
- an optical element (4) that has a region across which a value of a refractive index of the optical element (4) varies for passively modulating the wavefront of the light received from the first polarization element (3);
- a second polarization element (5) configured to define the polarization of the light received from the optical element (4).

2. An assembly according to claim 1, wherein:
- the assembly further comprising a housing (6) that encapsulates the light modulator (1) and the first and second polarization elements (3, 5) and the optical element (4);
- the housing (3) has an access for accessing the electronic interface (2);
- the housing (6) is elongated and comprises a proximal end at the first side of the assembly and a distal end which is opposite to the proximal end, and the housing is configured to lodge the light modulator (1) and the first and second polarization elements (3, 5) and the optical element (4) at respective positions along a longitudinal axis (L) of the housing (6), said longitudinal axis (L) coinciding with a propagation axis of the light;
- the light modulator (1) is a reflection mode or a transmission mode spatial light modulator, and preferably the housing (6) is threaded at the proximal end and/or at the distal end.

3. An assembly according to any of the previous claims, wherein the first polarization element (3) is a first polarizer, the second polarization element (5) is a second polarizer, preferably said first and second polarizers being linear polarizers and/or polarizing beam splitter.

4. An assembly according to any of the previous claims, wherein the optical element (4) is configured to anisotropically scatter light and comprises a pattern which preferably is etched or engraved on the surface.

5. An assembly according to any of the previous claims, wherein along at least one desired direction there is a stripe-shaped variation of the value of the refractive index of the optical element.

6. An assembly according to any of the previous claims, wherein the optical element comprises a material which has a refractive index of more than 1.3; a surface of the optical element comprises a pattern (41, 42) etched or engraved on the surface; said surface is made of the material; the material is more than 80% transparent to an optical frequency or to a range of optical frequencies

7. An assembly according to any of the previous claims, wherein the optical element (4) comprises any of: poly (methyl methacrylate), polyethylene terephthalate, Polycarbonate, Amorphous copolyesters, Fluorinated ethylene propylene, ABS thermoplastic, MABS thermoplastic, polymethylpentene, polyvinyl chloride, General Purpose Polystyrene, Styrene Methyl Methacrylate, fused silica amorphous silicon oxide, crystalline silicon oxide, sapphire, amorphous aluminum oxide, calcium fluoride, zinc selenide, zinc telluride, germanium, barium fluoride, magnesium fluoride, gallium phosphide, a crystalline or amorphous material, or a combination thereof, or a material that offers transmission above 80% for a visible frequency or range of visible frequencies.

8. An assembly according to any of the previous claims, wherein the light modulator (1) comprises:
- a beam splitter (12) which is configured to direct about half of an intensity of the light towards a modulator screen (13) which is reflective, the beam splitter (12) being also configured to allow light being reflected by the modulator screen (13) to pass through the beam splitter (12) and reach a dovetail prism (14);
- the modulator screen (13) which is connected to or comprises the electronic interface (2) and is configured to operate on a reflection mode for reflecting the light and for actively modulating the wavefront of said light;
- the dovetail prism (14) which is configured to direct towards a right-angle prism (15) the light received from the modulator screen;
- the right-angle prism (15) which is configured to receive the light from the dovetail prism (14) and direct said light towards the first polarization element (3).

9. An assembly according to any of the previous claims, wherein the optical element (4) is removably attachable or insertable to/in the assembly, preferably as a removable cassette.

10. An assembly according to any of the previous claims, wherein the assembly is any of a microscope lens system, an objective lens, an illumination lens, an optical fiber driver, a device for use in a secure communications system, a device for use in an optical physical unclonable function system, a laser lithography beam modifier, a device for use in vehicle's headlight

11. A microscope that comprises an assembly according to any of claims 1- 10.

12. The use of the assembly of any of claims 1-10 in any of: microscopy, fluorescence microscopy, a super-resolved microscopy, photoacoustic microscopy, light sheet fluorescence microscopy or structure illumination microscopy, driving an optical fiber, secure communications, implementing an optical physical unclonable functions, oPUF, protocol for authentication, lithography, smart adaptive lighting, a light of a vehicle.

13. A method for controlling light, comprising the consecutive steps of:
- receiving a wavefront of light;
- actively modulating the wavefront of light, thereby transforming said light into an actively modulated light;
- determining a polarization of the actively modulated light, thereby transforming the latter into a polarized light;
- passively modulating the wavefront of the polarized light, thereby transforming the latter into a passively modulated light;
- determining the polarization of the passively modulated light, thereby transforming the latter into an adapted light.

14. A method according to claim 13, wherein the adapted light is a light sheet.

15. A method according to any of claims 13-14 executed by means of a microscope which is according to any of claim 11, the microscope further comprising a feedback sensor or camera that is configured to receive the adapted light, the microscope further comprising a motorized stage which supports a sample that is illuminated with the adapted light received from the assembly's second polarization element, the microscope further comprising an imaging sensor or camera that is configured to acquire an optical readout by receiving light from the sample, the microscope further comprising or being connected to a computer which comprises a memory, wherein the computer is communicatively connected to the feedback sensor or camera and to the imaging sensor or camera, and the computer is also connected to and is configured to control via the electronic interface the light modulator of the assembly, the computer further being communicatively connected and configured to control the motorized stage, the method for microscopy further comprising the additional steps of:
- loading on the memory or computing with the computer a set of current parameters which correspond to operational parameters of the assembly's light modulator;
- controlling the light modulator according to the current parameters;
- detecting with the feedback sensor or camera the wavefront of the adapted light, and transferring to the computer information which is related to the detected wavefront;
- with the computer using the information and determining whether the detected wavefront differs from a desired wavefront, and/or determining a difference or similarity between the detected wavefront and the desired wavefront, wherein said desired wavefront is loaded or stored on the memory or is computed with the computer;
- if the detected wavefront differs from the desired wavefront, and/or if the difference is more than a condition difference, then repeat the above additional steps wherein in the first one of the additional steps a new set of current parameters is being loaded on the memory or is being computed with the computer by means of an optimization algorithm, until the detected light's wavefront is substantially the same with the desired wavefront, or until the difference is equal to or less than the condition difference;
- with the imaging sensor or camera acquiring an optical readout;
- calculating, by means of the computer, a set of positions;
- controlling, by means of the computer, the motorized stage to move at or about said positions;
- with the feedback sensor or camera acquiring a corresponding optical measurement for each one of the set of positions at or about which the motorized stage moves;
- transferring to the computer information which is related to the optical measurements;
- for each of said positions determining and setting with the computer corresponding operational parameters for the light modulator;
- with the imaging sensor or camera acquiring corresponding optical readouts for each of said positions;
- placing the stage at a resting position after acquiring the optical measurements corresponding to the set of positions;
- processing, by means of the computer, the information related to the optical readouts.

## Patentansprüche

1. Anordnung von optischen Elementen zur Steuerung von Licht, die in der Reihenfolge von einer ersten Seite der Anordnung Folgendes umfasst:
- einen Lichtmodulator (1), der konfiguriert ist, um eine Wellenfront von Licht, das durch die Anordnung hindurchgeht, aktiv zu modulieren, wobei der Lichtmodulator (1) eine elektronische Schnittstelle (2) umfasst;
- ein erstes Polarisationselement (3), das konfiguriert ist, um eine Polarisation des aus dem Lichtmodulator (1) empfangenen Lichts zu definieren;
- ein optisches Element (4), das eine Zone aufweist, über die ein Wert eines Brechungsindex des optischen Elements (4) zum passiven Modulieren der Wellenfront des aus dem ersten Polarisationselement (3) empfangenen Lichts variiert;
- ein zweites Polarisationselement (5), das konfiguriert ist, um die Polarisation des aus dem optischen Element (4) empfangenen Lichts zu definieren.

2. Anordnung gemäß Anspruch 1, wobei:
- die Anordnung ferner ein Gehäuse (6) aufweist, das den Lichtmodulator (1) und das erste und das zweite Polarisationselement (3, 5) und das optische Element (4) einkapselt;
- das Gehäuse (3) einen Zugang zum Zugreifen auf die elektronische Schnittstelle (2) aufweist;
- das Gehäuse (6) länglich ist und ein proximales Ende an der ersten Seite der Anordnung und ein distales Ende umfasst, das dem proximalen Ende gegenüberliegt, und das Gehäuse konfiguriert ist, um den Lichtmodulator (1) und das erste und das zweite Polarisationselement (3, 5) und das optische Element (4) an jeweiligen Positionen entlang einer Längsachse (L) des Gehäuses (6) unterzubringen, wobei die Längsachse (L) mit einer Ausbreitungsachse des Lichts zusammenfällt;
- der Lichtmodulator (1) ein Reflexionsmodus- oder ein Transmissionsmodus-Raumlichtmodulator ist, und vorzugsweise das Gehäuse (6) an dem proximalen Ende und/oder an dem distalen Ende mit Gewinde versehen ist.

3. Anordnung gemäß einem der vorhergehenden Ansprüche, wobei das erste Polarisationselement (3) ein erster Polarisator ist, das zweite Polarisationselement (5) ein zweiter Polarisator ist, wobei vorzugsweise der erste und der zweite Polarisator lineare Polarisatoren und/oder polarisierende Strahlteiler sind.

4. Anordnung gemäß einem der vorhergehenden Ansprüche, wobei das optische Element (4) konfiguriert ist, um Licht anisotrop zu streuen, und ein Muster umfasst, das vorzugsweise auf die Oberfläche geätzt oder graviert ist.

5. Anordnung gemäß einem der vorhergehenden Ansprüche, wobei entlang mindestens einer gewünschten Richtung eine streifenförmige Variation des Wertes des Brechungsindexes des optischen Elements vorliegt.

6. Anordnung gemäß einem der vorhergehenden Ansprüche, wobei das optische Element ein Material umfasst, das einen Brechungsindex von mehr als 1,3 aufweist; eine Oberfläche des optischen Elements ein Muster (41, 42) umfasst, das auf die Oberfläche geätzt oder graviert ist; die Oberfläche aus dem Material hergestellt ist; das Material für eine optische Frequenz oder für einen Bereich von optischen Frequenzen zu mehr als 80 % transparent ist.

7. Anordnung gemäß einem der vorhergehenden Ansprüche, wobei das optische Element (4) eines der Folgenden umfasst: Poly(methylmethacrylat), Polyethylenterephthalat, Polycarbonat, amorphe Copolyester, fluoriertes Ethylenpropylen, ABS-Thermoplast, MABS-Thermoplast, Polymethylpenten, Polyvinylchlorid, Allzweck-Polystyrol, Styrolmethylmethacrylat, geschmolzenes Silica, amorphes Siliziumoxid, kristallines Siliziumoxid, Saphir, amorphes Aluminiumoxid, Kalziumfluorid, Zinkselenid, Zinktellurid, Germanium, Bariumfluorid, Magnesiumfluorid, Galliumphosphid, ein kristallines oder amorphes Material oder eine Kombination davon oder ein Material, das für eine sichtbare Frequenz oder einen Bereich von sichtbaren Frequenzen eine Durchlässigkeit von mehr als 80 % bietet.

8. Anordnung gemäß einem der vorhergehenden Ansprüche, wobei der Lichtmodulator (1) Folgendes umfasst:
- einen Strahlteiler (12), der konfiguriert ist, um ungefähr die Hälfte einer Lichtintensität auf einen Modulatorschirm (13) zu richten, der reflektierend ist, wobei der Strahlteiler (12) ferner konfiguriert ist, um zu ermöglichen, dass Licht, das durch den Modulatorschirm (13) reflektiert wird, durch den Strahlteiler (12) hindurchgeht und ein Schwalbenschwanzprisma (14) erreicht;
- den Modulatorschirm (13), der mit der elektronischen Schnittstelle (2) verbunden ist oder diese umfasst und konfiguriert ist, um in einem Reflexionsmodus zum Reflektieren des Lichts und zum aktiven Modulieren der Wellenfront des Lichts zu arbeiten;
- das Schwalbenschwanzprisma (14), das konfiguriert ist, um das aus dem Modulatorschirm empfangene Licht auf ein rechtwinkliges Prisma (15) zu richten;
- das rechtwinklige Prisma (15), das konfiguriert ist, um das Licht aus dem Schwalbenschwanzprisma (14) zu empfangen und das Licht auf das erste Polarisationselement (3) zu richten.

9. Anordnung gemäß einem der vorhergehenden Ansprüche, wobei das optische Element (4) abnehmbar befestigbar an der Anordnung oder einsetzbar in diese ist, vorzugsweise als herausnehmbare Kassette.

10. Anordnung gemäß einem der vorhergehenden Ansprüche, wobei die Anordnung eines von einem Mikroskop-Linsensystem, einer Objektivlinse, einer Beleuchtungslinse, einem Lichtleitfaser-Treiber, einer Vorrichtung zur Verwendung in einem sicheren Kommunikationssystem, einer Vorrichtung zur Verwendung in einem System mit optischer, physikalischer, unklonierbarer Funktion, einem Laserlithographie-Strahlmodifikator, einer Vorrichtung zur Verwendung in einem Fahrzeugscheinwerfer ist.

11. Mikroskop, das eine Anordnung gemäß einem der Ansprüche 1-10 umfasst.

12. Verwendung der Anordnung nach einem der Ansprüche 1-10 in einem der Folgenden: Mikroskopie, Fluoreszenzmikroskopie, superauflösende Mikroskopie, photoakustische Mikroskopie, Lichtblatt-Fluoreszenzmikroskopie oder Strukturbeleuchtungsmikroskopie, Ansteuerung einer optischen Faser, sichere Kommunikation, Implementierung einer optischen physikalischen unklonierbaren Funktion, oPUF, Protokoll für Authentifizierung, Lithographie, intelligente adaptive Beleuchtung, Fahrzeuglicht.

13. Verfahren zum Steuern von Licht, das die folgenden aufeinanderfolgenden Schritte umfasst:
- Empfangen einer Wellenfront von Licht;
- aktives Modulieren der Wellenfront von Licht, wodurch das Licht in ein aktiv moduliertes Licht umgewandelt wird;
- Bestimmen einer Polarisation des aktiv modulierten Lichts, wodurch dieses in ein polarisiertes Licht umgewandelt wird;
- passives Modulieren der Wellenfront des polarisierten Lichts, wodurch dieses in ein passiv moduliertes Licht umgewandelt wird;
- Bestimmen der Polarisation des passiv modulierten Lichts, wodurch dieses in ein angepasstes Licht umgewandelt wird.

14. Verfahren gemäß Anspruch 13, wobei das angepasste Licht ein Lichtblatt ist.

15. Verfahren gemäß einem der Ansprüche 13-14, das mittels eines Mikroskops gemäß einem der Ansprüche 11 ausgeführt wird, wobei das Mikroskop ferner einen Rückkopplungssensor oder eine Kamera umfasst, der/die konfiguriert ist, um das angepasste Licht zu empfangen, wobei das Mikroskop ferner einen motorisierten Tisch umfasst, der eine Probe trägt, die mit dem angepassten Licht beleuchtet wird, das aus dem zweiten Polarisationselement der Anordnung empfangen wird, wobei das Mikroskop ferner einen Abbildungssensor oder eine Kamera umfasst, der/die konfiguriert ist, um eine optische Ablesung durch Empfangen von Licht aus der Probe zu erfassen, wobei das Mikroskop ferner einen Computer umfasst oder mit diesem verbunden ist, der einen Speicher umfasst, wobei der Computer in Kommunikationsverbindung mit dem Rückkopplungssensor oder der Kamera und dem Abbildungssensor oder der Kamera steht und der Computer auch mit dem Lichtmodulator der Anordnung verbunden und konfiguriert ist, um diesen über die elektronische Schnittstelle zu steuern, wobei der Computer ferner in Kommunikationsverbindung steht und konfiguriert ist, um den motorisierten Tisch zu steuern, wobei das Verfahren zur Mikroskopie ferner die folgenden zusätzlichen Schritte umfasst:
- Laden in den Speicher oder Berechnen mit dem Computer eines Satzes von aktuellen Parametern, die den Betriebsparametern des Lichtmodulators der Anordnung entsprechen;
- Steuern des Lichtmodulators gemäß den aktuellen Parametern;
- Erkennen der Wellenfront des angepassten Lichts mit dem Rückkopplungssensor oder der Kamera und Übermitteln von Informationen, die sich auf die erkannte Wellenfront beziehen, an den Computer;
- Verwenden der Informationen und Bestimmen mit dem Computer, ob die erkannte Wellenfront von einer gewünschten Wellenfront abweicht, und/oder Bestimmen eines Unterschieds oder einer Ähnlichkeit zwischen der erkannten Wellenfront und der gewünschten Wellenfront, wobei die gewünschte Wellenfront in den Speicher geladen oder gespeichert oder mit dem Computer berechnet wird;
- wenn die erkannte Wellenfront von der gewünschten Wellenfront abweicht und/oder wenn die Differenz größer als eine Bedingungsdifferenz ist, Wiederholen der obigen zusätzlichen Schritte, wobei in dem ersten der zusätzlichen Schritte ein neuer Satz von aktuellen Parametern in den Speicher geladen wird oder mit dem Computer mit Hilfe eines Optimierungsalgorithmus berechnet wird, bis die Wellenfront des erkannten Lichts im Wesentlichen mit der gewünschten Wellenfront übereinstimmt oder bis die Differenz gleich oder kleiner als die Bedingungsdifferenz ist;
- Erfassen einer optischen Anzeige durch den Abbildungssensor oder die Kamera;
- Berechnen eines Satzes von Positionen mittels des Computers;
- Steuern der Bewegung des motorisierten Tisches an oder um die Positionen mittels des Computers;
- Erfassen einer entsprechenden optischen Messung mit dem Rückkopplungssensor oder der Kamera für jede Position des Satzes von Positionen, an oder um die sich der motorisierte Tisch bewegt;
- Übermitteln von Informationen, die sich auf die optischen Messungen beziehen, an den Computer;
- Bestimmen und Einstellen der entsprechenden Betriebsparameter für den Lichtmodulator mit dem Computer für jede der Positionen;
- Erfassen von entsprechenden optischen Ablesungen mit dem Abbildungssensor oder der Kamera für jede der Positionen;
- Aufstellen des Tisches in einer Ruheposition nach dem Erfassen der optischen Messungen, die dem Satz von Positionen entsprechen;
- Verarbeiten der Informationen, die sich auf die optischen Ablesungen beziehen, mittels des Computers.

## Revendications

1. Ensemble d'éléments optiques pour la commande de lumière, comprenant dans l'ordre à partir d'un premier côté de l'ensemble :
- un modulateur de lumière (1) configuré pour moduler activement un front d'onde de lumière passant à travers l'ensemble, le modulateur de lumière (1) comprenant une interface électronique (2) ;
- un premier élément de polarisation (3) configuré pour définir une polarisation de la lumière reçue du modulateur de lumière (1) ;
- un élément optique (4) qui a une région à travers laquelle une valeur d'un indice de réfraction de l'élément optique (4) varie pour moduler passivement le front d'onde de la lumière reçue du premier élément de polarisation (3) ;
- un second élément de polarisation (5) configuré pour définir la polarisation de la lumière reçue de l'élément optique (4).

2. Ensemble selon la revendication 1, dans lequel :
- l'ensemble comprend en outre un boîtier (6) qui renferme le modulateur de lumière (1) et les premier et second éléments de polarisation (3, 5) et l'élément optique (4) ;
- le boîtier (3) a un accès permettant d'accéder à l'interface électronique (2) ;
- le boîtier (6) est allongé et comprend une extrémité proximale au niveau du premier côté de l'ensemble et une extrémité distale opposée à l'extrémité proximale, et le boîtier est configuré pour loger le modulateur de lumière (1) et les premier et second éléments de polarisation (3, 5) et l'élément optique (4) à des positions respectives le long d'un axe longitudinal (L) du boîtier (6), ledit axe longitudinal (L) coïncidant avec un axe de propagation de la lumière ;
- le modulateur de lumière (1) est un modulateur de lumière spatiale en mode réflexion ou en mode transmission, et de préférence le boîtier (6) est fileté au niveau de l'extrémité proximale et/ou au niveau de l'extrémité distale.

3. Ensemble selon l'une quelconque des revendications précédentes, dans lequel le premier élément de polarisation (3) est un premier polariseur, le second élément de polarisation (5) est un second polariseur, de préférence, lesdits premier et second polariseurs étant des polariseurs linéaires et/ou un séparateur de faisceau polarisant.

4. Ensemble selon l'une quelconque des revendications précédentes, dans lequel l'élément optique (4) est configuré pour diffuser la lumière de manière anisotrope et comprend un motif qui est de préférence marqué ou gravé sur la surface.

5. Ensemble selon l'une quelconque des revendications précédentes, dans lequel le long d'au moins une direction souhaitée, il existe une variation en forme de bande de la valeur de l'indice de réfraction de l'élément optique.

6. Ensemble selon l'une quelconque des revendications précédentes, dans lequel l'élément optique comprend un matériau qui a un indice de réfraction supérieur à 1,3 ; une surface de l'élément optique comprend un motif (41, 42) marqué ou gravé sur la surface ; ladite surface est constituée du matériau ; le matériau est transparent à plus de 80 % à une fréquence optique ou à une plage de fréquences optiques.

7. Ensemble selon l'une quelconque des revendications précédentes, dans lequel l'élément optique (4) comprend l'un quelconque parmi : poly(méthacrylate de méthyle), téréphtalate de polyéthylène, polycarbonate, copolyesters amorphes, éthylène-propylène fluoré, thermoplastique ABS, thermoplastique MABS, polyméthylpentène, chlorure de polyvinyle, polystyrène à usage général, méthacrylate de méthyle-styrène, oxyde de silicium amorphe à base de silice fondue, oxyde de silicium cristallin, saphir, oxyde d'aluminium amorphe, fluorure de calcium, séléniure de zinc, tellurure de zinc, germanium, fluorure de baryum, fluorure de magnésium, phosphure de gallium, un matériau cristallin ou amorphe, ou une combinaison de ceux-ci, ou un matériau qui offre une transmission supérieure à 80 % pour une fréquence visible ou une plage de fréquences visibles.

8. Ensemble selon l'une quelconque des revendications précédentes, dans lequel le modulateur de lumière (1) comprend :
- un séparateur de faisceau (12) qui est configuré pour diriger environ la moitié d'une intensité de la lumière vers un écran modulateur (13) qui est réfléchissant, le séparateur de faisceau (12) étant également configuré pour permettre à la lumière réfléchie par l'écran modulateur (13) de passer à travers le séparateur de faisceau (12) et d'atteindre un prisme en queue d'aronde (14) ;
- l'écran modulateur (13) qui est connecté à ou comprend l'interface électronique (2) et qui est configuré pour fonctionner en mode réflexion afin de refléter la lumière et de moduler activement le front d'onde de ladite lumière ;
- le prisme en queue d'aronde (14) qui est configuré pour diriger vers un prisme à angle droit (15) la lumière reçue de l'écran modulateur ;
- le prisme à angle droit (15) qui est configuré pour recevoir la lumière du prisme en queue d'aronde (14) et diriger ladite lumière vers le premier élément de polarisation (3).

9. Ensemble selon l'une quelconque des revendications précédentes, dans lequel l'élément optique (4) peut être fixé ou inséré de manière amovible à/dans l'ensemble, de préférence sous forme de cassette amovible.

10. Ensemble selon l'une quelconque des revendications précédentes, dans lequel l'ensemble est l'un quelconque parmi un système de lentilles de microscope, une lentille de focalisation, une lentille d'éclairage, un dispositif d'entraînement de fibre optique, un dispositif pour une utilisation dans un système de communication sécurisé, un dispositif pour une utilisation dans un système de fonction physique optique non clonable, un modificateur de faisceau de lithographie laser, un dispositif pour une utilisation dans un phare de véhicule.

11. Microscope comprenant un ensemble selon l'une des revendications 1 à 10.

12. Utilisation de l'ensemble de l'une quelconque des revendications 1 à 10 dans l'un quelconque parmi : microscopie, microscopie à fluorescence, microscopie super-résolue, microscopie photoacoustique, microscopie à fluorescence à nappe de lumière ou microscopie à illumination de structure, entraînant une fibre optique, communications sécurisées, mettant en œuvre une fonction optiques physique non clonable, oPUF, protocole pour l'authentification, lithographie, éclairage adaptatif intelligent, feu de véhicule.

13. Procédé permettant de commander la lumière, comprenant les étapes consécutives consistant à :
- recevoir un front d'onde de lumière ;
- moduler activement le front d'onde de lumière, transformant ainsi ladite lumière en une lumière activement modulée ;
- déterminer une polarisation de la lumière activement modulée, transformant ainsi cette dernière en une lumière polarisée ;
- moduler passivement le front d'onde de la lumière polarisée, transformant ainsi cette dernière en une lumière passivement modulée ;
- déterminer la polarisation de la lumière passivement modulée, transformant ainsi cette dernière en lumière adaptée.

14. Procédé selon la revendication 13, dans lequel la lumière adaptée est une feuille lumineuse.

15. Procédé selon l'une quelconque des revendications 13 à 14 exécuté au moyen d'un microscope selon l'une quelconque de la revendication 11, le microscope comprenant en outre un capteur ou une caméra de rétroaction qui est configuré(e) pour recevoir la lumière adaptée, le microscope comprenant en outre une platine motorisée qui supporte un échantillon qui est éclairé avec la lumière adaptée reçue du second élément de polarisation de l'ensemble, le microscope comprenant en outre un capteur ou une caméra d'imagerie qui est configuré(e) pour acquérir une lecture optique en recevant la lumière de l'échantillon, le microscope comprenant en outre ou étant connecté à un ordinateur comprenant une mémoire, dans lequel l'ordinateur est connecté de manière communicative au capteur ou à la caméra de rétroaction et au capteur ou à la caméra d'imagerie, et l'ordinateur est également connecté à et configuré pour commander, par le biais de l'interface électronique, le modulateur de lumière de l'ensemble, l'ordinateur est en outre connecté de manière communicative et configuré pour commander la platine motorisée, le procédé de microscopie comprenant en outre les étapes supplémentaires consistant à :
- charger sur la mémoire ou calculer avec l'ordinateur un ensemble de paramètres actuels qui correspondent aux paramètres fonctionnels du modulateur de lumière de l'ensemble :
- commander le modulateur de lumière en fonction des paramètres actuels ;
- détecter, avec le capteur ou la caméra de rétroaction, le front d'onde de la lumière adaptée, et transférer à l'ordinateur les informations relatives au front d'onde détecté ;
- l'ordinateur utilisant les informations et déterminant si le front d'onde détecté diffère d'un front d'onde souhaité, et/ou déterminant une différence ou une similitude entre le front d'onde détecté et le front d'onde souhaité, dans lequel le front d'onde souhaité est chargé ou stocké sur la mémoire ou est calculé par l'ordinateur ;
- si le front d'onde détecté diffère du front d'onde souhaité, et/ou si la différence est supérieure à une différence de condition, répéter alors les étapes supplémentaires ci-dessus dans lesquelles, dans la première parmi les étapes supplémentaires, un nouvel ensemble de paramètres actuels est chargé sur la mémoire ou est calculé avec l'ordinateur au moyen d'un algorithme d'optimisation, jusqu'à ce que le front d'onde de la lumière détectée soit sensiblement le même que le front d'onde souhaité, ou jusqu'à ce que la différence soit égale ou inférieure à la différence de condition ;
- le capteur ou la caméra d'imagerie acquérant une lecture optique ;
- calculer, au moyen de l'ordinateur, un ensemble de positions ;
- commander, au moyen de l'ordinateur, la platine motorisée à se déplacer au niveau de ou autour desdites positions ;
- le capteur ou la caméra de rétroaction acquérant une mesure optique correspondante pour chacune de l'ensemble de positions auxquelles ou autour desquelles la platine motorisée se déplace ;
- transférer à l'ordinateur les informations relatives aux mesures optiques ;
- pour chacune desdites positions, déterminer et régler avec l'ordinateur les paramètres fonctionnels correspondants pour le modulateur de lumière ;
- le capteur ou la caméra d'imagerie acquérant des lectures optiques correspondantes pour chacune desdites positions ;
- placer la platine en position de repos après l'acquisition des mesures optiques correspondant à l'ensemble de positions ;
- traiter, au moyen de l'ordinateur, les informations relatives aux lectures optiques.
